# NEUE EUROPÄISCHE PATENTSCHRIFT

(11) **EP 2 800 770 B2**
(45) Veröffentlichungstag und Bekanntmachung des Hinweises auf die Entscheidung über den Einspruch: **19.02.2020**
(45) Hinweis auf die Patenterteilung: 17.08.2016
(21) Anmeldenummer: 12806414.4
(22) Anmeldetag: 12.12.2012
(51) Int. Cl.: C08G 18/48, C08G 18/66, C08J 9/00, C08K 5/00

(54) **FLAMMGESCHÜTZTE POLYURETHANSCHAUMSTOFFE**
FLAME-PROOF POLYURETHANE FOAMS
MOUSSES DE POLYURÉTHANE IGNIFUGES

(30) Priorität: 03.01.2012 EP 12150081
(43) Veröffentlichungstag der Anmeldung: 12.11.2014
(73) Patentinhaber: BASF SE, 67056 Ludwigshafen am Rhein (DE)
(72) Erfinder: OTERO MARTINEZ, Iran, 32351 Stemwede (DE); LOPEZ LOPEZ, Jose Manuel, 08004 Barcelona (ES); ANTICH MOROS, Ferran, 08004 Barcelona (ES)
(74) Vertreter: BASF IP Association
(86) Internationale Anmeldenummer: PCT/EP2012/075138
(87) Internationale Veröffentlichungsnummer: WO 2013/102535

(56) Entgegenhaltungen:
- EP-A1- 0 824 134
- EP-A1- 1 230 297
- EP-A1- 2 554 560
- EP-A2- 0 192 888
- WO-A1-02/079315
- DE-A1- 19 702 760
- DE-C1- 3 909 017
- US-A- 4 839 393
- US-A- 5 173 515
- US-B2- 6 861 452
- DATABASE cas [O] Database accession no. 38051-10-4
- EDWARD D. WEIL ET AL: "Commercial Flame Retardancy of Polyurethanes", JOURNAL OF FIRE SCIENCES, vol. 22, May 2004 (2004-05-01), pages 183 - 210
- PRODUCT INFORMATION FYROL® PNX
- "Product Data Sheet Arcol® Polyol 1108", COVESTRO, 7 December 2009 (2009-12-07), pages 1 - 2
- "Product Data Sheet Reofos® 50", Great Lakes solutions, 21 October 2010 (2010-10-21), page 1,
- A. Wolska: Poster: "Flammability of flexible polyurethane foams modified with graphite and phosphorous filler"
- Programm der Konferenz, "Syntactic and Composite Foams III", 29.5 - 3.6 2011 in Cetraro, Italien
- ANNA WOLSKA ET AL.: "Thermal and mechanical behavior of flexible polyurethane foams modified with graphite and phosphorous fillers", J. MATER. SCI, vol. 47, no. 15, 10 April 2012 (2012-04-10), pages 5627 - 5634
- ANNA WOLSKA ET AL.: "Fire behavior and thermal stability of flexible polyurethane foams modified by phosphorous and expandable graphite addition", CONFERENCE PAPER OF THE ECCM15 - 15 EUROPEAN CONFERENCE ON COMPOSITE MATERIALS, 24 June 2012 (2012-06-24), Venice, Italy, pages 1 - 8

## Beschreibung

Verfahren zur Herstellung eines flammgeschützten Polyurethanhalbhartschaumstoffs oder Polyurethanhartschaumstoffs mit einer Dichte von 5 bis 50 g/L, bei dem man (a) organisches Polyisocyanat mit (b) polymeren Verbindungen mit mindestens zwei gegenüber Isocyanaten reaktiven Wasserstoffatomen (c) gegebenenfalls Kettenverlängerungs und/oder Vernetzungsmittel, (d) Flammschutzmittel, (e) Treibmittel, (f) Katalysatoren und gegebenenfalls (g) Hilfsmittel und Zusatzstoffe zu einer Reaktionsmischung vermischt und diese Reaktionsmischung ausreagieren lässt, wobei das Flammschutzmittel d) Blähgraphit und oligomeres Organophosphorflammschutzmittel enthält. Weiter betrifft die vorliegende Erfindung einen flammgeschützten Polyurethanhalbhartschaumstoff oder Polyurethanhartschaumstoff, herstellbar nach einen erfindungsgemäßen Verfahren sowie die Verwendung eines solchen in Fahrzeugen zur Schallisolierung.

Polyurethanschaumstoffe sind für eine Reihe von Anwendungen, wie Polsterungen, thermische Isolierungen, Verpackungen, Autoarmaturen oder Baumaterialien geeignet. Für viele dieser Anwendungen ist ein effektiver Flammschutz nötig. Daher wurden bereits unterschiedlichste Flammschutzmittel für Polyurethane beschreiben. Insbesondere für Polyurethanschaumstoffe mit einer geringen Dichte ist der Einsatz von effektiven Brandschutzmitteln sehr wichtig, da diese aufgrund ihrer großen Oberfläche besonders brandanfällig sind.

So werden als Flammschutzmittel beispielsweise halogenierte Verbindungen eingesetzt. Halogenierte Flammschutzmittel, insbesondere bromhaltige Flammschutzmittel, sind aber aus toxikologischen, ökologischen und regulatorischen Gründen unerwünscht. Zudem führen halogenhaltige Flammschutzmittel zu einer erhöhten Rauchgasdichte im Brandfall. Darüber hinaus kann es bei einer thermischen Bearbeitung, wie beim Thermoformen plastisch verformbarer Polyurethanschaumstoffe zur unerwünschten Freisetzung von Halogenwasserstoffen kommen.

Weit verbreitete Flammschutzmittel sind phosphorhaltige Verbindungen, darunter phosphororganische Verbindungen. Phosphororganische Flammschutzmittel basieren meist auf Phosphat-, Phosphonat- oder Phosphitestern. Bekannte, phosphorhaltige Flammschutzmittel, wie Triethylphosphat (TEP) oder Diethylethanphosphonat (DEEP), tragen beispielsweise zu Emissionen der Kunststoffe bei, wodurch diese einen unangenehmen Geruch aufweisen. Dies erschwert den Einsatz dieser Flammschutzmittel zur Herstellung von Polyurethanschaumstoffen, die in geschlossenen Räumen, beispielsweise im Automobilinnenraum, eingesetzt werden sollen. Darüber hinaus beeinflussen viele der bekannten phosphorhaltigen Verbindungen die Schäumreaktion bei der Herstellung von Polyurethanschaumstoffen sowie die Eigenschaften der Schaumstoffe, wie mechanische Eigenschaften, negativ. So führt der Einsatz dieser Flammschutzmittel vor allem bei der Herstellung niederdichter Polyurethanschaumstoffe mit einer Dichte von 50 g/L und weniger zu Schaumkollaps und Schrumpf. Davon sind insbesondere weichere Schaumstofftypen und offenzellige Schaumstoffe betroffen. Auch wirken bekannte, flüssige Flammschutzmittel häufig als Weichmacher.

Zur Verbesserung der flammschützenden Eigenschaften sowie zur Verringerung der Nachteile der einzelnen Flammschutzmittel werden häufig Mischungen unterschiedlicher Flammschutzmittel eingesetzt. Als eine Komponente dieser Flammschutzmischungen hat sich Blähgraphit als besonders wirksam erwiesen.

So beschreibt DE 19702760 die Kombination Blähgraphit mit verschiedene halogenhaltige- und nicht halogenhaltige Phosphate, bevorzugt Trialkylphosphate, bei der Herstellung von Polyurethanschaumstoffen.

WO 0046283 beschreibt Verschiedene Kombinationen von Blähgraphit und Phosphorverbindungen z.B. Exolit (Ammoniumpolyphosphat), Tris(2-chlorisopropyl)phosphat (TCPP) und allgemein Phosphonat- und Phosphatestern. Auch WO01025324 beschreibt die Kombination von Blähgraphit mit Phosphat, Phosphonat oder Phosphinoxid, insbesondere solche mit aromatischen Substituenten zur Herstellung flammgeschützter Polyurethanschaumstoffe.

Trotz Verbesserungen durch die Kombination von Blähgraphit mit phosphorbasierten Flammschutzmitteln, wodurch geringere Mengen der Einzelkomponenten eingesetzt werden müssen, zeigen Polyurethanschaumstoffe, die Kombinationen dieser Flammschutzmittel enthalten, immer noch bekannte Nachteile, wie Geruchsbildung. Auch zeigen diese Flammschutzmittelkombinationen negative Einflüsse auf die Schäumreaktion, insbesondere bei niederdichten Schaumstoffen mit einer Dichte von 50 g/L und weniger, sowie auf die mechanischen Eigenschaften der Schäume. Schließlich lässt sich auch die Brandschutzwirkung bei Beibehaltung der Menge eingesetzten Flammschutzmittels weiter verbessern.

WO 2002079315 beschreibt Flammschutzadditive, bestehend aus einer Mischung eises Organophosphor-Flammhemmers, einem Benzofuran-2-on-Stabilisators und einem monomeren Phosphatesterverträglichmacher zur Veringerung der Kernverfärbung eines Polyurethanschaumstoffs, dem sogenannten "Schmoren". Dabei kann als Organo-phosphor-Flammhemmer ein oligomeres Polyphosphat-Flammschutzmittel eingesetzt werden.

Aufgabe der vorliegenden Erfindung war es unter Einsatz von Flammschutzmitteln flammgeschützte Polyurethanschaumstoffe mit geringer Dichte zu liefern, die geringe Emissionen und damit wenig Geruchsbildung, gute mechanische Eigenschaften und ein hervorragendes Brandverhalten zeigen. Weiter war es Aufgabe ein Verfahren zur Herstellung solcher Polyurethanschaumstoffe zu liefern, das Schrumpf der Schäume bei deren Herstellung vermeidet.

Die erfindungsgemäße Aufgabe konnte durch flammgeschützte Polyurethanhalbhartschaumstoffe oder Polyurethanhartschaumstoffe mit einer Dichte von 5 bis 50 g/L, herstellbar indem man (a) organisches Polyisocyanat mit (b) polymeren Verbindungen mit mindestens zwei gegenüber Isocyanaten reaktiven Wasserstoffatomen (c) gegebenenfalls Kettenverlängerungs und/oder Vernetzungsmittel, (d) Flammschutzmittel, (e) Treibmittel, (f) Katalysatoren und gegebenenfalls (g) Hilfsmittel und Zusatzstoffe zu einer Reaktionsmischung vermischt und diese Reaktionsmischung ausreagieren lässt, wobei das Flammschutzmittel (d) Blähgraphit und oligomeres Organophosphorflammschutzmittel, enthält, sowie das entsprechende Herstellungsverfahren, gelöst werden.

Im Rahmen der Erfindung werden unter Polyurethan-Schaumstoffen Schaumstoffe gemäß DIN 7726 verstanden. Die erfindungsgemäßen flammgeschützten Polyurethanhalbhartschaumstoffe oder Polyurethanhartschaumstoffe weisen dabei eine Dichte von 5 bis 50 g/L, besonders bevorzugt 5 bis 30 g/L und insbesondere 5 bis 20 g/L auf. Erfindungsgemäße PolyurethanHalbhartschaumstoffe weisen eine Druckspannung bei 10 % Stauchung nach DIN 53 421 / DIN EN ISO 604 von größer 15 bis kleiner 80 kPa auf. Erfindungsgemäße PolyurethanHalbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und PolyurethanHalbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 150 kPa, besonders bevorzugt größer gleich 180 kPa auf. Üblicherweise verfügt der PolyurethanHartschaumstoff nach DIN ISO 4590 über eine Geschlossenzelligkeit von größer 85%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6.

Besonders bevorzugt ist der flammgeschützte Polyurethanschaumstoff der Erfindung ein plastisch verformbarer Polyurethanhartschaumstoff oder Polyurethanhalbhartschaumstoff, der vorzugsweise zur Geräuschdämmung im Innenraum oder im Motorraum von Fahrzeugen eingesetzt wird. Solche plastisch verformbare Polyurethanhartschaumstoffe oder Polyurethanhalbhartschaumstoffe weisen eine hohe Offenzelligkeit von vorzugsweise größer 50%, besonders bevorzugt größer 80 % und insbesondere größer 90% nach DIN ISO 4590 auf. Plastisch verformbare Polyurethanhartschaumstoffe oder Polyurethanhalbhartschaumstoffe und deren Verwendung als Innenverkleidung in Kraftfahrzeugen ist bekannt und beispielsweise beschrieben im "Kunststoffhandbuch, Band 7, Polyurethane", Carl Hanser Verlag, 3. Auflage 1993, Kapitel 6.5.4.1. oder in WO 2009203764.

Erfindungsgemäße plastisch verformbare Polyurethan-Hartschaumstoffe oder Polyurethanhalbhartschaumstoffe können, vorzugsweise bei Werkzeugtemperaturen von 80 bis 180 °C, besonders bevorzugt von 100 bis 150 °C, plastisch verformt werden.

Als organische Polyisocyanate a) werden vorzugsweise die technisch gut zugänglichen aromatischen Polyisocyanate, besonders bevorzugt Mischungen aus Diphenylmethandiisocyanaten (MDI) und Polyphenyl-Polymethylenpolyisocyanaten, sogenanntes Roh-MDI, vorteilhafterweise mit einem monomer-MDI-Gehalt von 30 bis 65 Gew.-%, besonders bevorzugt von 35 bis 60 Gew.-% und insbesondere von 35 bis 55 Gew.-% eingesetzt.

Die Polyisocyanate a) können in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Vorzugsweise werden dazu die im Folgenden unter b) beschriebenen Polyole eingesetzt. Gegebenenfalls können der Umsetzung zum Polyisocyanatprepolymer noch Kettenverlängerungsmittel (a-3) zugegeben werden. Als Kettenverlängerungsmittel (a-3) können alle im Folgenden unter c) beschriebenen Kettenverlängerer eingesetzt werden. Vorzugsweise wird dabei das Verhältnis von organischen Polyisocyanaten (a-1) zu Polyolen (a-2) und Kettenverlängerern (a-3) so gewählt, dass das Isocyanatprepolymer einen NCO-Gehalt von 10 bis 28 %, besonders bevorzugt von 14 bis 24 % aufweist.

Geeignet als organisches Polyisocyanat a) sind auch die Isocyanurat-, Biuret-, Carbodiimid- und/oder vorzugsweise Urethangruppen enthaltende Roh-MDI Modifikationen. Außerdem kann es für besondere Anwendungsgebiete zweckmäßig sein, dem Roh-MDI untergeordnete Mengen, beispielsweise bis maximal 10 Gew.-%, Toluylendiisocyanate-Isomerengemische und/oder gegebenenfalls mit Biuret-, Carbodiimid- und/oder Urethangruppen modifiziertes 4,4' - und/ oder 2,4' -MDI zu zusetzen.

Als polymere Verbindungen mit mindestens zwei gegenüber Isocyanaten reaktiven Wasserstoffatomen (b) und einem Molekulargewicht von mindestens 500 g/mol können alle zur Polyurethanherstellung bekannten Verbindungen mit mindestens zwei reaktiven Wasserstoffatomen und einem Molekulargewicht von mindestens 500 g/mol eingesetzt werden. Diese weisen beispielsweise eine Funktionalität von 2 bis 8 und einem Molekulargewicht von 400 bis 12000 auf. So können beispielsweise Polyetherpolyamine und/oder Polyole, ausgewählt aus der Gruppe der Polyetherpolyole, Polyesterpolyole oder Mischungen daraus, verwendet werden.

Die bevorzugt zur Anwendung kommenden Polyole sind Polyetherole und/oder Polyesterole mit Molekulargewichten zwischen 500 und 12000, bevorzugt 500 bis 6000, insbesondere 500 bis weniger als 3000, und bevorzugt einer mittleren Funktionalität von 2 bis 6, bevorzugt 2 bis 4.

Die erfindungsgemäß verwendbaren Polyetherole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalisator eingesetzt werden, beispilsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon. Die Polyetherpolyole können einzeln oder in Form von Mischungen verwendet werden.

Polyesterole werden z.B. hergestellt aus Alkandicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Versterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Die bevorzugt zur Anwendung kommenden Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol, Triole mit 3 bis 6 Kohlenstoffatomen, wie z.B. Glycerin und Trimethylolpropan und als höherwertiger Alkohol Pentaerythrit. Je nach den gewünschten Eigenschaften können die mehrwertigen Alkohole allein oder gegebenenfalls in Mischungen untereinander verwendet werden.

Als Kettenverlängerungsmittel und/oder Vernetzungsmittel c) können Substanzen mit einem Molekulargewicht von vorzugsweise kleiner 500 g/mol, besonders bevorzugt von 60 bis 400 g/mol eingesetzt werden, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 500, besonders bevorzugt von 60 bis 400 und insbesondere 60 bis 350 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Vernetzer (c) niedermolekulare hydroxylgruppenhaltige Polyalkylenoxide auf Basis Ethylen- und/oder 1,2-Propylenoxid, besonders bevorzugt Ethylen und trifunktionellen Startern, insbesondere Glycerin, eingesetzt.

Der Anteil an Kettenverlängerungsmittel und/oder Vernetzungsmittel c) am Gesamtgewicht der Komponenten b) bis f) beträgt, falls vorhanden, vorzugsweise 1 bis 60 Gew.-%, besonders bevorzugt 3 bis 40 Gew.-% und insbesondere 4 bis 15 Gew.-%.

Wenn es sich bei den erfindungsgemäßen flammgeschützten Polyurethanschaumstoffen um plastisch verformbare Polyurethanhartschaumstoffe oder Polyurethanhalbhartschaumstoffe handelt, werden vorzugsweise Polyetherole als polymere Verbindungen mit mindestens zwei gegenüber Isocyanaten reaktiven Wasserstoffatomen (b) eingesetzt. Besonders bevorzugt enthalten diese mindestens ein di- bis trifunktionelles Polyoxyalkylenpolyol (b1) mit einer Hydroxylzahl von 20 bis 40 und einem Anteil an primären Hydroxylgruppen von größer 70 %. Dabei enthält das Polyoxyalkylenpolyol (b1) vorzugsweise mindestens 50 Gew.-%, besonders bevorzugt mindestens 80 Gew.-% Propylenoxid.

Insbesondere zur Herstellung von plastisch verformbaren Polyurethanhalbhartschaumstoffen kann neben dem Polyoxyalkylenpolyol (b1) ein Polyoxyalkylenpolyol (b2) eingesetzt werden, das eine Funktionalität von 2 bis 4, eine Hydroxylzahl von 25 bis 60, einen Anteil von primären OH-Gruppen von größer als 70 %, bevorzugt größer als 80 %, jeweils Bezogen auf die Gesamtzahl an OH-Gruppen, und einen Gehalt an Ethylenoxyd von vorzugsweise mindestens 50 Gew.-%, besonders bevorzugt 60 Gew.-% bis 95 % aufweist.

Weiter wird zur Herstellung eines plastisch verformbaren Polyurethanhartschaumstoffs oder Polyurethanhalbhartschaumstoffs mindestens ein 2 bis 4-funktionelles Polyoxyalkylenpolyol (c1) mit einer Hydroxylzahl von 150 bis 650 und einem Anteil an primären Hydroxylgruppen von größer 80 % eingesetzt, wobei die Polyhydroxyverbindung (c1) vorzugsweise mindestens 30 Gew.-%, besonders bevorzugt mindestens 50 Gew.-% Ethylenoxid enthält. Vorzugsweise wird neben der Komponente c1 noch eine weitere Komponente (c2) eingesetzt, die eine Funktionalität von 3 und ein Molekulargewicht von vorzugsweise kleiner als 200 g/mol und besonders bevorzugt kleiner als 150 g/mol aufweist.

Dabei ist der Anteil der Komponenten (b1), (b2), (c1) und (c2), bezogen auf das Gesamtgewicht der Komponenten (b) und (c) vorzugsweise größer als 60 Gew.-%, besonders bevorzugt größer als 80 Gew.-% und insbesondere größer als 90 Gew.-%. Dabei liegt der Gewichtsanteil der Komponenten (b1), (b2), (c1) und (c2), bezogen auf das Gesamtgewicht dieser Komponenten bei 25 bis 50 Gew.-% (b1), 15 bis 30 Gew.-% (b2), 25 bis 50 Gew.-% (c1) und 0 bis 10 Gew.-% (c2).

Als Flammschutzmittel (d) werden Flammschutzmittel eingesetzt, die Blähgraphit und oligomeres Organophosphorflammschutzmittel enthalten.

Blähgraphit oder expandierbarer Graphit ist allgemein bekannt. Dieser enthält ein oder mehrere expandierbare Mittel, sodass eine unter den Bedingungen eines Feuers eine beträchtliche Ausdehnung erfolgt. Blähgraphit wird durch bekannte Verfahren hergestellt. Dabei wird Graphit üblicherweise zunächst mit Oxidationsmitteln, wie Nitraten, Chromaten, Peroxiden, oder durch Elektrolyse modifiziert, um die Kristallschichten zu offnen und anschließend werden Nitrate oder Sulfate in den Graphit eingelagert, welche unter gegebenen Bedingungen eine Expansion bewirken können.

Die Menge des expandierbaren Graphits, die in den erfindungsgemäßen flammgeschützten Polyurethanschaumstoffen eingesetzt wird, ist üblicherweise geringer als 20 Gew.-%, bezogen auf das Gesamtgewicht der Komponenten (a) bis (g). Vorzugsweise werden 1 bis 15 Gew.-%, besonders bevorzugt 2 bis 10 Gew.-% und insbesondere 4 bis 9 Gew.-% Blähgraphit, bezogen auf das Gewicht der Komponenten (a) bis (g), eingesetzt.

Das oligomere Organophosphor-Flammschutzmittel enthält vorzugsweise einen Phosphorgehalt von nicht weniger als 5 Gew.-% und mindestens 3 Phosphatester-Einheiten. Dabei umfassen "Phosphorestereinheiten" Phosphatestereinheiten und Phosphonatestereinheiten. Damit umfassen die erfindungsgemäßen oligomeren Organophosphorflammschutzmittel Strukturen mit reinen Phosphonat-Einheiten, mit reinen Phosphat-Einheiten sowie mit Phosphonat- und Phosphat-Einheiten.

Der hierin verwendete Begriff "Oligomer" bedeutet, dass Organophosphor-Flammschutzmittel, die nur eine oder nur zwei Phosphorestereinheiten aufweisen, ausgeschlossen sind. Ein Organophosphor-Flammschutzmittel dieses Typs ist ganz allgemein in US 4,382,042 beschrieben. Dabei sind Organophosphor-Flammschutzmittel, die keine Halogenatome enthalten, bevorzugt. Diese bevorzugten Organophosphatoligomeren können durch Reaktion von Phosphorpentoxid mit dem ausgewahlten Trialkylphosphat, zum Beispiel mit Triethylphosphat, hergestellt werden, um einen Polyphosphatester zu bilden, der P-O-P-Bindungen enthält, die dann mit Epoxid, z.B. mit Ethylenoxid zur Reaktion gebracht werden, um das gewünschte Produkt zu bilden. Dieses bevorzugte oligomere Organophosphor-Flammschutzmittel weist die Formel (I) auf:

RO-[P(X)(O)-O-R'-O-]ₙ-(P(O)(X)(OR) (I)

wobei n für eine natürliche Zahl von 2 bis 25, vorzugsweise 2 bis 20, X unabhängig voneinander für-R oder -OR, bevorzugt ausschließlich -OR, steht und R unabhängig voneinander für einen organischen Rest, ausgewählt aus der Gruppe, bestehend aus Alkyl mit 1 bis 10 Kohlenstoffatomen und Hydroxyalkyl mit 1 bis 10 Kohlenstoffatomen, und R' für eine Alkylengruppe mit 1 bis 10 Kohlenstoffatomen steht. Dabei werden vorzugsweise solche oligomeren Organophosphorflammschutzmittel eingesetzt, die unterschiedliche Werte für n aufweisen, wobei besonders bevorzugt der Zahlenmittelwert für n 2 bis 20 beträgt.

Besonders bevorzugte oligomere Phosphate umfassen Ethyl- und Ethylengruppen als die Alkyl- und Alkylenreste, weisen eine Hydroxy-Funktionalitat von nicht mehr als 30 mg KOH/g, eine Säurezahl von nicht mehr als ca. 2,5 mg KOH/g und einen Phosphorgehalt von ca. 15 bis ca. 25 Gew.-% auf. Diese sind hierin nachfolgend als "PEEOP" (oder als "Poly(ethylethylenoxy)phos-phat") bezeichnet. Ein im Handel erhältliches Beispiel eines oligomeren Organophosphor-Flammschutzmittels ist FYROL® 51 von Akzo Nobel Chemicals Inc., das mit einem Mehrstufenverfahren aus Dimethylmethylphosphonat, Phosphorpentoxid, Ethylenglykol und aus Ethylenoxid hergestellt wird. Ein weiteres bevorzugtes, im Handel erhältliches oligomeres Organophosphor-Flammschutzmittel ist "FYROL ® PNX. Dabei handelt es sich um einen oligomeren Phosphatester der Formel RO-[P(OR)(O)-O-R'-O-]ₙ-(P(O)(OR)₂, worin der zahlengemittelte Mittelwert von n im Bereich von ca. 2 bis 20 liegt, R für Ethyl und R' Ethylen steht. Es weist bevorzugt einen Phosphorgehalt von ca. 19 Gew.-% und eine Viskosität bei 25°C von ca. 2000 mPas auf.

Der Gehalt des oligomeren Organophosphor-Flammschutzmittel, bezogen auf das Gesamtgewicht der Komponenten (a) bis (g) beträgt vorzugsweise 0,1 bis 10 Gew.-%, besonders bevorzugt 0,5 bis 8 und insbesondere 1 bis 5 Gew.-%.

Neben den oligomeren Organophosphor-Flammschutzmitteln und Blähgraphit können einzelne oder mehrere, beliebige, üblicherweise für Polyurethane eingesetzte Flammschutzmittel verwendet werden. Diese umfassen halogensubstituierte Phosphate, wie Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat und/oder anorganische Flammschutzmittel, wie roter Phosphor, Aluminiumoxidhydrat, Antimontrioxid, Arsenoxid, Ammoniumpolyphosphat und Calciumsulfat und/oder Cyanursäurederivate, wie z. B. Melamin

Vorzugsweise enthalten die Flammschutzmittel (d) keine Halogengruppen aufweisende Verbindungen. Besonders bevorzugt weisen die Flammschutzmittel (d) neben dem oligomeren Organophosphorflammschutzmittel und Blähgraphit weniger als 30 Gew.-%, besonders bevorzugt weniger als 10 Gew.-% jeweils bezogen auf das Gesamtgewicht der Flammschutzmittel (d), weitere Flammschutzmittel. Insbesondere enthalten die Flammschutzmittel (d) neben dem oligomeren Organophosphorflammschutzmittel und Blähgraphit keine weiteren Flammschutzmittel.

Als Treibmittel (e) wird vorzugsweise Treibmittel, enthaltend Wasser, eingesetzt. Als Treibmittel (e) können neben Wasser noch allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel (e) Wasser als alleiniges Treibmittel eingesetzt.

Der Gehalt an Wasser beträgt in einer bevorzugten Ausführungsform von 1 bis 10 Gew.-%, bevorzugt 2 bis 9 Gew.-%, besonders bevorzugt 3 bis 7 Gew.-%, bezogen auf das Gesamtgewicht der Komponenten (b) bis (f).

Zu den Katalysatoren (f) gehören Verbindungen, die die Reaktion der reaktive Wasserstoffatome, insbesondere Hydroxylgruppen, enthaltenden Polyhydroxyverbindungen b) sowie des chemischen Treibmittels mit den organischen Polyisocyanaten a) beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Dimethylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethylhexylendiamin-1,6, Pentamethyl-diethylentriamin, Tetramethyl-diaminoethylether, Bis-(dimethylaminopropyl)-harnstoff Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Beispielsweise können gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol und/oder die in EP-A 0 629 607 beschriebenen Umsetzungsprodukte aus Acetessigsäureethylester, Polyetherpolyolen und 1-(Dimethylamino)-3-amino-propan als Katalysator e) verwendet werden.

Als Hilfsmittel und Zusatzstoffe (g) können Schaumstabilisatoren, Zellöffner, oberflächenaktive Substanzen, Reaktionsverzögerer, Stabilisatoren gegen Alterungs- und Witterungseinflüsse, Weichmacher, fungistatisch und bakteriostatisch wirksame Substanzen, Pigmente und Farbstoffe sowie die an sich bekannten üblichen organischen und anorganischen Füllstoffe eingesetzt werden.

Als Schaumstabilisatoren werden vorzugsweise Siliconbasierte Schaumstabilisatoren verwendet. Weiter können Siloxan-Polyoxyalkylen-Copolymere, Organopolysiloxane, ethoxylierte Fettalkohole und Alkylphenole und Ricinusöl- bzw. Ricinolsäureester als Schaumstabilisatoren verwendet werden.

Als Zellöffner wirken beispielweise Paraffine, Polybutadiene, Fettalkohole und Dimethylpolysiloxane.

Als Stabilisatoren gegen Alterungs- und Witterungseinflüsse werden meist Antioxidantien eingesetzt. Dies können beispielsweise sterisch gehinderten Phenole, HALS-Stabilisatoren (hindered amine light stabilizer), Triazine, Benzophenone und der Benzotriazole sein.

Als oberflächenaktive Substanzen kommen beispielsweise Verbindungen in Betracht, welche zur Unterstützung der Homogenisierung der Ausgangsstoffe dienen und eine Phasenstabilität der Polyolkomponente über längere Zeiträume gewährleisten. Diese sind gegebenenfalls auch geeignet, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaums eignen sich ferner oligomere Polyacrylate mit Polyoxyalkylen- und Fluoralkanresten als Seitengruppen.

Die oberflächenaktiven Substanzen werden üblicherweise in Mengen von 0,01 bis 5 Gew.-%, bezogen auf das Gesamtgewicht der Polyhydroxylverbindungen b), eingesetzt.

Als Füllstoffe, insbesondere verstärkend wirkende Füllstoffe, könne die an sich bekannten, üblichen organischen und anorganischen Füllstoffe, Verstärkungsmittel und Beschwerungsmittel zugegeben werden. Im einzelnen seien beispielhaft genannt: anorganische Füllstoffe wie z. B. silikatische Mineralien, beispielsweise Schichtsilikate wie Antigorit, Serpentin, Hornblenden, Amphibole, Chrysotil, Zeolithe, Talkum; Metalloxide, wie z. B. Kaolin, Aluminiumoxide, Aluminiumsilikat, Titanoxide und Eisenoxide, Metallsalze wie z. B. Kreide, Schwerspat und anorganische Pigmente, wie Cadmiumsulfid, Zinksulfid sowie Glaspartikel. Als organische Füllstoffe kommen beispielsweise in Betracht: Russ, Melamin, Kollophonium, Cyclopentadienylharze und polymermodifierte Polyoxyalken-polyole.

Nähere Angaben über Verwendungs- und Wirkungsweise der oben genannten Hilfsmittel und Zusatzmittel sowie weitere Beispiele sind z. B. im "Kunststoffhandbuch, Band 7, Polyurethane", Carl Hanser Verlag, 3. Auflage 1993, Kapitel 3.4 angegeben.

Organische Polyisocyanate (a), polymeren Verbindungen mit mindestens zwei gegenüber Isocyanaten reaktiven Wasserstoffatomen (b), Kettenverlängerungs- und/oder Vernetzungsmittel (c), Flammschutzmittel (d), Treibmittel (e), Katalysatoren (f) und gegebenenfalls Hilfsmittel und Zusatzstoffe (g) werden vorzugsweise in solchen Mengen zur Umsetzung gebracht, dass der Isocyanatindex im Bereich von 60 bis 400, besonders bevorzugt von 80 bis 150 liegt. Bei der Herstellung der plastisch verformbaren Polyurethanschaumstoffe liegt der Isocyanatindex vorzugsweise bei 95 bis 130, besonders bevorzugt 98 - 118.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die erfindungsgemäßen flammgeschützten Polyurethanschaumstoffe werden vorzugsweise nach dem one shot-Verfahren in Form von großen Schaumstoffblöcken kontinuierlich in Blockschaumanlagen oder diskontinuierlich in offenen Schaumstoff-Formwerkzeugen hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem 2-Komponenten-Verfahren zu arbeiten und als sogenannte Komponente A ein Gemisch aus der Mischung der polymeren Verbindungen mit mindestens zwei gegenüber Isocyanaten reaktiven Wasserstoffatomen (b), Kettenverlängerungs- und/oder Vernetzungsmittel (c), Flammschutzmittel (d)Treibmittel (e), Katalysatoren (f) und gegebenenfalls Hilfsmittel und Zusatzstoffe (g) zu verwenden und als sogenannte Komponente B die organischen, gegebenenfalls modifizierten Polyisocyanate (a) einzusetzen. Da die A- und B-Komponenten sehr gut lagerstabil sind, können sie in dieser Form einfach transportiert und brauchen vor der Verarbeitung nur noch in den entsprechenden Mengen intensiv gemischt werden. Die Vermischung der Aufbaukomponenten (a) bis (g) oder der Komponenten (A) und (B) kann mit Hochdruck- oder Niederdruck-Verarbeitungsanlagen durchgeführt werden.

Zur Herstellung der flammgeschützten Polyurethanschaumstoffe werden die beschriebenen Ausgangsstoffe, zweckmäßigerweise in Form der Komponenten A und B, bei Temperaturen von ungefähr 15 bis 60 °C, vorzugsweise 20 bis 40 °C gemischt und danach die Reaktionsmischung in offenen, gegebenenfalls temperierten Formwerkzeugen oder in kontinuierlich arbeitenden Blockschaumanlagen aufschäumen gelassen.

Die erhaltenen Polyurethanschaumstoffe besitzen in Abhängigkeit von der verwendeten Treibmittelmenge Dichten von 5 bis 50 g/L, vorzugsweise von 5 bis 30 g/L und besonders bevorzugt 5 bis 20 g/L. Die Produkte zeigen gleichzeitig eine sehr gute Hydrolysebeständigkeit.

Aus den erhaltenen Polyurethanschaumstoffblöcken, können falls erforderlich, entsprechend den herzustellenden Formkörper dimensionierte Schaumstoffblöcke geschnitten und diese in PU-Hartschaumstoffplatten mit einer Dicke von 4 bis 50 mm, vorzugsweise 6 bis 30 mm und insbesondere von 6 bis 20 mm gespalten werden. Hierzu geeignet sind alle technisch üblichen Spaltvorrichtungen, wobei in der Praxis vorzugsweise Horizontalspaltanlagen mit umlaufenden Bandmesser verwendet werden.

Erfindungsgemäße Polyurethanhalbhartschaumstoff oder Polyurethanhartschaumstoffe zeigen ein vorteilhaftes Brandverhalten und sind stabil zu verarbeiten, das heißt, es tritt beispielsweise weniger Schrumpf auf, als bei üblichen Flammschutzmittelkombinationen. Insbesondere offenzellige Polyurethanhalbhartschaumstoffe oder Polyurethanhartschaumstoffe mit einer geringen Dichte von vorzugsweise kleiner 50 g/L, besonders bevorzugt 5 bis 30 g/L und insbesondere 5 bis 20 g/L sind bei deren Herstellung anfällig gegenüber Schrumpf. Dabei zeigt sich überraschenderweise, dass diese Schaumstoffe bei Einsatz der erfindungsgemäßen Flammschutzmittel weniger oder gar nicht schrumpfen. Weiter emittieren die erfindungsgemäßen plastisch verformbaren Polyurethanschaumstoffe beim thermoplastischen Verarbeiten im Wesentlichen keine Halogenwasserstoffe.

Die erfindungsgemäßen Polyurethanschaumstoffe eignen sich hervorragend für den Einsatz in Fahrzeugen, insbesondere im Automobilinnenbereich als Verkleidung von Wänden, Türen und Dächern oder im Motorraum. Dabei zeigen die erfindungsgemäß bevorzugten plastisch verformbaren Polyurethanschaumstoffe eine hervorragende Schallabsorption.

Im Folgenden soll die Erfindung anhand von Beispielen verdeutlicht werden.

Ausgangsmaterialien:
- Polyol A:: Polyetherol mit einer OH-Zahl 28 mgKOH/g und einer Funktionalität von 2.7 auf Basis von Ethylenoxyd und Propylenoxyd, einem Propylenoxydgehalt von 84% und einem Ethylenoxydgehalt von 14 %
- Polyol B:: Polyetherol mit einer OH-Zahl 535 mgKOH/g und einer Funktionalität von 3 auf Basis von Ethylenoxyd
- Polyol C:: Polyetherol mit einer OH-Zahl 42 mgKOH/g, einer Funktionalität von 2.7 auf Basis von Ethylenoxyd
- DC 198:: DABCO DC198 Zellstabilisator der Firma Air Products
Kosmos 29: Katalysator der Firma Evonik

Flammenhemmenden Mittel
- Blähgraphit:: Expandierbares Graphit der Firma LUH
- TEP:: Triethylphosphate der Firma ICL Industrial Products
- Reofos® 50:: Isopropyliertes Triarylphosphat der Firma Chemtura
- Fyrol® PNX:: oligomerer Phosphatester der Firma ICL Industrial Products
- Isocyanat:: 60 Teile Lupranat M 20W (Polymer-MDI mit NCO Gehalt 31.2) und 40 Teile Lupranat MI (Gemisch aus 2,4'- und 4,4'-MDI mit NCO Gehalt von 33,2)

Die Mischung A wurde durch Abmischung von folgenden Komponenten vorbereitet:

| | |
|---|---|
| 37.4 | Tl. Polyol A |
| 35 | Tl. Polyol B |
| 23 | Tl. Polyol C |
| 4.6 | Tl. Glycerin |

Folgende Rezepturen wurden in einer 125 l Box hergestellt, wobei der Isocyanatindex auf 104 eingestellt wurde:

| | V1 | V2 | V3 | V4 | B1 | B2 |
|---|---|---|---|---|---|---|
| Mischung A | 70.7 | 85.7 | 80.7 | 60.7 | 65.7 | 60.7 |
| Wasser | 8 | 8 | 8 | 8 | 8 | 8 |
| DC 198 | 0.8 | 0.8 | 0.8 | 0.8 | 0.8 | 0.8 |
| Kosmos 29 | 0.5 | 0.5 | 0.5 | 0.5 | 0.5 | 0.5 |

| Flammschutzmittel | | | | | | |
|---|---|---|---|---|---|---|
| Blähgraphit | 20 | - | - | 20 | 20 | 20 |
| Reofos 50 | - | - | - | 10 | - | - |
| Fyrol PNX | - | 5 | 10 | - | 5 | 10 |
| Total | 100 | 100 | 100 | 100 | 100 | 100 |

| Isocyanate | | | | | | |
|---|---|---|---|---|---|---|
| Isocyanat | 157 | 165 | 163 | 152 | 155 | 152 |
| Gew.-% P | - | 0.3 | 0.7 | 0.3 | 0.3 | 0.7 |

| Eigenschaften | | | | | | |
|---|---|---|---|---|---|---|
| Startzeit (s) | 40 | 40 | 40 | 33 | 38 | 38 |
| Fadenzeit (s) | 74 | 100 | 99 | 68 | 80 | 84 |
| Dichte¹ (g/L) | 15.3 | 15.6 | 15.0 | 15.8 | 16.2 | 15.7 |
| Stauchhärte² (kPa) 40% | 29.2 | - | - | 32.0 | 33.2 | 33.1 |
| ¹ DIN EN ISO 845 | | | | | | |
| ² DIN EN ISO 3386 | | | | | | |

Versuche, Triethylphosphat als Flammschutzmittel einzusetzen, führten zu starkem Schrumpf.

### Brandprüfungen

**ISO 3795**

| | V1 | V2 | V3 | V4 | B1 | B2 |
|---|---|---|---|---|---|---|
| Brandstrecke vor Startlinie (mm) | 28 | 254 | 35 | 15 | 11 | 12 |
| | 27 | 254 | 30 | 17 | 13 | 10 |
| | 29 | 254 | 56 | 19 | 15 | 10 |
| | 33 | 254 | 36 | 14 | 12 | 11 |
| | 38 | 254 | 27 | 24 | 16 | 8 |
| **Mittelwert (mm)** | **31** | **254** | **37** | **18** | **13** | **10** |

**Califomia Test 117**

| | V1 | V2 | V3 | V4 | B1 | B2 |
|---|---|---|---|---|---|---|
| zerstörte Länge (mm) | 4 | - | - | 4 | 3 | 2 |
| Nachbrennzeit (s) | 5 | - | - | 4 | 0 | 0 |
| | 10 | - | - | 0 | 0 | 0 |
| | >10 | - | - | 3 | 0 | 0 |
| | >10 | - | - | 7 | 0 | 0 |
| | >10 | - | - | 5 | 0 | 0 |
| **Mittelwert (s)** | **>10** | - | - | **4** | **0** | **0** |

Weiter wurden Probenkörper gemäß den Versuchen V1, V4, B1 und B2 dem Volkswagen-Test PV3357 unterzogen. Dazu wurden die Probeplatten einmal waagrecht gelagert, so dass die Beflammung an der Fläche erfolgt und einmal senkrecht, so dass die Beflammung an der Kante erfolgt gelagert. Bei der Flächenbeflammung wird zur Beflammung ein Bunsenbrenner mit lodernder gelber Flamme und einer Flammenhöhe von 100 mm eingesetzt, wobei der Abstand Probenplatte zu Gasaustrittsöffnung des Bunsenbrenners 90 mm beträgt. Bei der Kantenbeflammung wird zur Beflammung ein Bunsenbrenner mit lodernder gelber Flamme und einer Flammenhöhe von 40 mm eingesetzt, wobei der Abstand Probenplatte zu Gasaustrittsöffnung des Bunsenbrenners 30 mm beträgt. Dabei wird als Brennzeit die Zeitdifferenz von Entzündung der Probe bis zu deren Erlöschen angegeben.

| | V1 | V4 | B1 | B2 |
|---|---|---|---|---|
| Kantenbeflammung - Kurzzeit (15 Sekunden) | | | | |
| Brennzeit (s) | 14 | 15 | 10 | 10 |
| Geschädigter Bereich Höhe (mm) | 160 | 110 | 100 | 70 |
| Kantenbeflammung - Langzeit (10 Minuten) | | | | |
| Brennzeit (s) | 39 | 28 | 26 | 16 |
| Geschädigter Bereich Höhe (mm) | 170 | 130 | 100 | 100 |
| Flächenbeflammung - Kurzzeit (15 Sekunden) | | | | |
| Brennzeit (s) | 14 | 14 | 10 | 10 |
| Geschädigter Bereich Ø (mm) | 120 | 110 | 65 | 60 |
| Flächenbeflammung - Langzeit (10 Minuten) | | | | |
| Brennzeit (s) | 15 | 19 | 7 | 8 |
| Geschädigter Bereich Ø (mm) | 130 | 90 | 80 | 90 |
| **Mittelwert (mm)** | **145** | **110** | **86** | **80** |
| Ø : Durchmesser | | | | |

## Patentansprüche

1. Verfahren zur Herstellung eines flammgeschützten Polyurethanhalbhartschaumstoffs oder einen Polyurethanhartschaumstoff mit einer Dichte von 5 bis 50 g/L, bei dem man
a) organisches Polyisocyanat mit
b) polymeren Verbindungen mit mindestens zwei gegenüber Isocyanaten reaktiven Wasserstoffatomen
c) gegebenenfalls Kettenverlängerungs und/oder Vernetzungsmittel,
d) Flammschutzmittel,
e) Treibmittel,
f) Katalysatoren und gegebenenfalls
g) Hilfsmittel und Zusatzstoffe
zu einer Reaktionsmischung vermischt und diese Reaktionsmischung ausreagieren lässt, wobei das Flammschutzmittel (d) Blähgraphit und oligomeres Organophosphorflammschutzmittel, das mindestens drei Phosphorestereinheiten aufweist, enthält.

2. Verfahren nach Anspruch 1, **dadurch gekennzeichnet, dass** das oligomere Organophosphorflammschutzmittel mindestens 5 Gew.-% Phosphor, bezogen auf das Gesamtgewicht des oligomeren Organophosphorflammschutzmittels, enthält.

3. Verfahren nach Anspruch 1 oder 2, **dadurch gekennzeichnet, dass** das oligomere Organophosphorflammschutzmittel die allgemeine Formel (I)
RO-[P(X)(O)-O-R'-O-]ₙ-(P(O)(X)(OR) (I)
aufweist, wobei n für eine natürliche Zahl von 2 bis 25, -X unabhängig voneinander für -OR oder -R steht, -R unabhängig voneinander für einen organischen Rest, ausgewählt aus der Gruppe, bestehend aus Alkyl mit 1 bis 10 Kohlenstoffatomen und Hydroxyalkyl mit 1 bis 10 Kohlenstoffatomen, und R' für eine Alkylengruppe mit 1 bis 10 Kohlenstoffatomen steht.

4. Verfahren nach Anspruch 3, **dadurch gekennzeichnet, dass** X für -OR steht.

5. Verfahren nach Anspruch 3 oder 4, **dadurch gekennzeichnet, dass** -R für einen Ethylrest und -R' ist und für einen Ethylenrest steht.

6. Verfahren nach einem der Ansprüche 3 bis 5, **dadurch gekennzeichnet, dass** das oligomere Organophosphorflammschutzmittel eine Mischung aus zwei oder mehreren Verbindungen der Formel (I) ist, die sich durch unterschiedliche Werte für n unterscheiden.

7. Verfahren nach einem der Ansprüche 1 bis 6, **dadurch gekennzeichnet, dass** der Anteil an Blähgraphit, 1 bis 15 Gew.-% und der Anteil an oligomerem Organophosphorflammschutzmittel 0,1 bis 10 Gew.-%, jeweils bezogen auf das Gesamtgewicht der Komponenten (a) bis (g), beträgt.

8. Verfahren nach einem der Ansprüche 1 bis 7, **dadurch gekennzeichnet, dass** die polymeren Verbindungen mit mindestens zwei gegenüber Isocyanaten reaktiven Wasserstoffatomen (b) Polyetherole enthält.

9. Verfahren nach einem der Ansprüche 1 bis 8, **dadurch gekennzeichnet, dass** das organische Polyisocyanat (a) eine Mischung aus Diphenylmethandiisocyanaten und Polyphenyl-polymethylen-polyisocyanaten enthält.

10. Verfahren nach einem der Ansprüche 1 bis 9, **dadurch gekennzeichnet, dass** das Treibmittel (e) Wasser ist.

11. Flammgeschützter Polyurethanhalbhartschaumstoff oder Polyurethanhartschaumstoff, erhältlich nach einem Verfahren gemäß einem der Ansprüche 1 bis 10.

12. Verwendung eines Polyurethanhalbhartschaumstoffs oder Polyurethanhartschaumstoffs nach Anspruch 11 in Fahrzeugen zur Schallisolierung von Wänden, Türen und Dächern oder im Motorraum.

## Claims

1. A process for producing a flame-retardant semirigid polyurethane foam or a rigid polyurethane foam of density from 5 to 50 g/L, by mixing
a) organic polyisocyanate with
b) polymeric compounds having at least two hydrogen atoms reactive toward isocyanates,
c) optionally chain extender and/or crosslinking agent,
d) flame retardant,
e) blowing agent,
f) catalysts, and optionally
g) auxiliary and additives
to give a reaction mixture and permitting said reaction mixture to react completely, where the flame retardant (d) comprises expandable graphite and oligomeric organophosphorus flame retardant which has at least three phosphorus ester units.

2. The process according to claim 1, wherein the oligomeric organophosphorus flame retardant comprises at least 5% by weight of phosphorus, based on the total weight of the oligomeric organophosphorus flame retardant.

3. The process according to claim 1 or 2, wherein the oligomeric organophosphorus flame retardant has the general formula (I)
RO-[P(X)(O)-O-R'-O-]ₙ-(P(O)(X)(OR) (I),
wherein n is a natural number from 2 to 25, -X is mutually independently -OR or -R, -R is mutually independently an organic moiety selected from the group consisting of alkyl having from 1 to 10 carbon atoms and hydroxyalkyl having from 1 to 10 carbon atoms, and R' is an alkylene group having from 1 to 10 carbon atoms.

4. The process according to claim 3, wherein X is - OR.

5. The process according to claim 3 or 4, wherein -R is an ethyl moiety and -R' is and is an ethylene moiety.

6. The process according to any of claims 3 to 5, wherein the oligomeric organophosphorus flame retardant is a mixture made of two or more compounds of the formula (I) which differ by different values for n.

7. The process according to any of claims 1 to 6, wherein the proportion of expandable graphite is from 1 to 15% by weight and the proportion of oligomeric organophosphorus flame retardant is from 0.1 to 10% by weight, based in each case on the total weight of components (a) to (g).

8. The process according to any of claims 1 to 7, wherein the polymeric compounds having at least two hydrogen atoms (b) reactive toward isocyanates comprise polyetherols.

9. The process according to any of claims 1 to 8, wherein the organic polyisocyanate (a) comprises a mixture of diphenylmethane diisocyanates and of polyphenyl polymethylene polyisocyanates.

10. The process according to any of claims 1 to 9, wherein the blowing agent (e) is water.

11. A flame-retardant semirigid polyurethane foam or rigid polyurethane foam obtainable by a process according to any of claims 1 to 10.

12. The use of a semirigid polyurethane foam or rigid polyurethane foam according to claim 11 in vehicles for acoustic insulation of panels/bulkheads, doors and roofs, or in the engine compartment.

## Revendications

1. Procédé de fabrication d'une mousse semi-rigide de polyuréthane ignifugée ou d'une mousse rigide de polyuréthane d'une densité de 5 à 50 g/l, selon lequel
a) un polyisocyanate organique est mélangé avec
b) des composés polymères contenant au moins deux atomes d'hydrogène réactifs avec les isocyanates,
c) éventuellement des allongeurs de chaîne et/ou des agents de réticulation,
d) des agents ignifuges,
e) des agents gonflants,
f) des catalyseurs et éventuellement
g) des adjuvants et des additifs,
pour former un mélange réactionnel, et on laisse réagir ce mélange réactionnel, l'agent ignifuge (d) contenant du graphite expansé et un agent ignifuge organophosphore oligomère, qui comprend au moins trois unités ester phosphorique.

2. Procédé selon la revendication 1, **caractérisé en ce que** l'agent ignifuge organophosphore oligomère contient au moins 5 % en poids de phosphore, par rapport au poids total de l'agent ignifuge organophosphore oligomère.

3. Procédé selon la revendication 1 ou 2, **caractérisé en ce que** l'agent ignifuge organophosphore oligomère présente la formule générale (I)
RO-[P(X)(O)-O-R'-O-]ₙ-(P(O)(X)(OR) (I)
dans laquelle n représente un nombre naturel de 2 à 25, les -X représentent indépendamment les uns des autres -OR ou -R, les -R représentent indépendamment les uns des autres un radical organique choisi dans le groupe constitué par alkyle de 1 à 10 atomes de carbone et hydroxyalkyle de 1 à 10 atomes de carbone, et R' représente un groupe alkylène de 1 à 10 atomes de carbone.

4. Procédé selon la revendication 3, **caractérisé en ce que** X représente -OR.

5. Procédé selon la revendication 3 ou 4, **caractérisé en ce que** -R représente un radical éthyle et -R' est et représente un radical éthylène.

6. Procédé selon l'une quelconque des revendications 3 à 5, **caractérisé en ce que** l'agent ignifuge organophosphore oligomère est un mélange de deux composés de formule (I) ou davantage, qui diffèrent par différentes valeurs de n.

7. Procédé selon l'une quelconque des revendications 1 à 6, **caractérisé en ce que** la proportion de graphite expansé est de 1 à 15 % en poids et la proportion d'agent ignifuge organophosphore oligomère est de 0,1 à 10 % en poids, à chaque fois par rapport au poids total des composants (a) à (g).

8. Procédé selon l'une quelconque des revendications 1 à 7, **caractérisé en ce que** les composés polymères contenant au moins deux atomes d'hydrogène réactifs avec les isocyanates (b) contiennent des polyéthérols.

9. Procédé selon l'une quelconque des revendications 1 à 8, **caractérisé en ce que** le polyisocyanate organique (a) contient un mélange de diisocyanates de diphénylméthane et de polyisocyanates de polyphényl-polyméthylène.

10. Procédé selon l'une quelconque des revendications 1 à 9, **caractérisé en ce que** l'agent gonflant (e) est de l'eau.

11. Mousse semi-rigide de polyuréthane ou mousse rigide de polyuréthane ignifugée, pouvant être obtenue par un procédé selon l'une quelconque des revendications 1 à 10.

12. Utilisation d'une mousse semi-rigide de polyuréthane ou d'une amousse rigide de polyuréthane selon la revendication 11 dans des automobiles pour l'isolation acoustique de parois, de portes et de toits ou dans le compartiment moteur.
